# EUROPÄISCHE PATENTSCHRIFT

(11) **EP 3 296 132 B1**
(45) Veröffentlichungstag und Bekanntmachung des Hinweises auf die Patenterteilung: **27.03.2019**
(21) Anmeldenummer: 17189894.3
(22) Anmeldetag: 07.09.2017
(51) Int. Cl.: B60C 27/10, B60C 27/12

(54) **SPANNVORRICHTUNG FÜR EINE GLEITSCHUTZ- ODER REIFENSCHUTZVORRICHTUNG EINES FAHRZEUGREIFENS MIT EINEM HANDAUSZUG**
CLAMPING DEVICE FOR AN ANTI-SKID OR TIRE PROTECTION DEVICE OF A VEHICLE WHEEL COMPRISING A MANUAL PULL-OUT
DISPOSITIF DE SERRAGE POUR UN DISPOSITIF D'ANTIDÉRAPAGE OU DE PROTECTION D'UN PNEUMATIQUE DE VÉHICULE DÉPLOYÉ MANUELLEMENT

(30) Priorität: 09.09.2016 DE 102016217232
(43) Veröffentlichungstag der Anmeldung: 21.03.2018
(73) Patentinhaber: RUD Ketten Rieger & Dietz GmbH u. Co. KG, 73432 Aalen (DE)
(72) Erfinder: Sieber, Frank, 73432 Aalen (DE); Schmidtke, Werner, 89174 Altheim (DE)
(74) Vertreter: Grünecker Patent- und Rechtsanwälte PartG mbB

(56) Entgegenhaltungen:
- EP-A2- 1 839 915
- WO-A2-2007/092786
- DE-B3-102004 037 332
- JP-A- H09 193 631
- JP-U- H0 360 405

## Beschreibung

Die Erfindung betrifft eine Spannvorrichtung für eine Gleitschutz- oder Reifenschutzvorrichtung für einen Fahrzeugreifen, mit einem zugmittelförmigen Spannmittel und einem Gehäuse, in dem sich eine Einzugseinrichtung zum selbsttätigen Einziehen des Spannmittels in das Gehäuse befindet, sowie eine Gleitschutz- oder Reifenschutzvorrichtung mit einer solchen Spannvorrichtung.

Für Gleitschutz- oder Reifenschutzvorrichtungen, insbesondere für Schneeketten, ist es bekannt, Spannvorrichtungen zu verwenden, die ein Drahtseil als Spannmittel einziehen. Das Spannmittel spannt und sichert die Schneekette selbsttätig auf dem Fahrzeugreifen. Die EP 1 989 066 B1 und die DE 297 03 911 U1 zeigen Beispiele derartiger Spannvorrichtungen.

Die gattungsbildende EP 1 839 915 A2 zeigt eine Spannvorrichtung für eine Gleitschutzkette mit einem Gehäuse und einem Betätigungsglied, das zumindest zwei Blockierpositionen aufweist, um das Einziehen eines Spannstrangs in das Gehäuse hinein oder das Herausziehen des Spannstrangs aus dem Gehäuse heraus zu blockieren.

In der DE 10 2004 037 332 B3 ist eine Spannvorrichtung zum Spannen eines Kettennetzes einer Gleitschutzkette gezeigt. Die Spannvorrichtung weist zwei Spannstränge auf, mit deren Hilfe in zwei unterschiedliche Richtungen Spannkräfte in die äußere Halterung der Gleitschutzkette einleitbar sind.

Die WO 2007/092786 A2 betrifft eine Spannvorrichtung zum Spannen von Schneeketten. Die Spannvorrichtung weist einen Spannstrang auf, der in ein Gehäuse eingeführt ist und dort mit einem Ratschenmechanismus verbunden ist. Durch den Ratschenmechanismus kann das Einziehen bzw. Herausziehen des Spannstranges blockiert werden.

Für die Benutzer einer Gleitschutz- oder Reifenschutzvorrichtung ist eine leichte Bedienbarkeit, insbesondere eine einfache und schnelle Montage und Demontage sehr wichtig, weil die Gleitschutz- oder Reifenschutzvorrichtung meist unter widrigen Umweltbedingungen benutzt wird.

Die vorliegende Erfindung stellt sich folglich die Aufgabe, die eingangs genannte Spannvorrichtung so zu verbessern, dass sich ihre Bedienung, insbesondere die Montage und Demontage einer Gleitschutz- oder Reifenschutzvorrichtung weiter vereinfacht.

Gelöst wird diese Aufgabe dadurch, dass sich an einer Öffnung des Gehäuses der Spannvorrichtung ein Handauszug für das Spannmittel befindet, der mit einem Handgriff versehen und mit dem Spannmittel verbunden ist.

Durch diese recht einfache Lösung lässt sich insbesondere die Demontage einer Gleitschutz- oder Reifenschutzvorrichtung erheblich vereinfachen. Obwohl Spannvorrichtungen bereits seit geraumer Zeit bei Gleitschutz- oder Reifenschutzvorrichtungen eingesetzt werden, fehlt ein derartiger Handauszug. Bislang müssen die Benutzer von Hand in die Gleitschutz- oder Reifenschutzvorrichtung oder das Spannmittel greifen, um das Spannmittel aus der Spannvorrichtung herauszuziehen. Oftmals greifen Benutzer dann an die falsche Stelle oder die Gleitschutz- oder Reifenschutzvorrichtung ist so verschmutzt, so dass sich Spannmittel nicht sofort löst. Dadurch besteht bei den bekannten Spannvorrichtungen das Risiko, dass die Kleidung des Benutzer verschmutzt oder er länger als eigentlich notwendig mit der Gleitschutz- oder Reifenschutzvorrichtung hantieren muss. Durch den erfindungsgemäß vorgesehenen Handauszug und den Handgriff wird dies vermieden.

Die Erfindung kann durch eine Reihe weiterer, jeweils für sich vorteilhafte und beliebig miteinander kombinierbarer Weiterbildungen nochmals verbessert werden.

Gemäss der Erfindung ist das Gehäuse zusätzlich zu der Öffnung mit einer Einzugsöffnung versehen sein, durch die das Spannmittel in das Gehäuse geführt ist. Bei dieser Ausgestaltung ist also der Handauszug an einer anderen Öffnung des Gehäuses angeordnet als die Einzugsöffnung. Dies ist beispielsweise dann sinnvoll, wenn das Spannmittel vollständig in das Gehäuse eingezogen wird und somit von außen keinen Angriffspunkt mehr bietet, oder wenn das Spannmittel vollständig verdeckt ist.

Der Handauszug kann bei dieser Ausgestaltung mit dem Spannmittel insbesondere bei eingezogenem Spannmittel zwischen der Einzugsöffnung und der Einzugseinrichtung verbunden sein. Damit liegt bei eingezogenem Spannmittel die Verbindungsstelle, an der der Handauszug und das Spannmittel miteinander verbunden sind, geschützt im Inneren des Gehäuses und kann nicht verschmutzen.

Um das Spannmittel einziehen zu können, ist es von Vorteil, wenn der Handauszug an einer entlang des Spannmittels verschieblichen Verbindungsstelle mit dem Spannmittel verbunden ist. So kann der Handauszug an der Verbindungsstelle beispielsweise eine Rolle aufweisen, die mit dem Handgriff verbunden ist, wobei das Spannmittel über die Rolle geführt ist. Das Spannmittel kann im Gehäuse beim Einziehen in das Gehäuse über die Rolle laufen.

Die Rolle kann über eine Schlaufe oder einen Ring mit dem Handgriff verbunden sein, wobei das Spannmittel bevorzugt durch die Schlaufe oder den Ring geführt ist. Somit sind Handgriff und Spannmittel unverlierbar miteinander verbunden. Die Schlaufe kann auch ohne Rolle entlang des Spannmittels verschieblich am Spannmittel gehalten sein.

Gemäß einer weiteren vorteilhaften Ausgestaltung kann der Handauszug mit einem durch die Öffnung in das Gehäuse geführten Zugmittel, beispielsweise einem Seil, versehen sein. Das Zugmittel ist mit dem Spannmittel verbunden. Zum Herausziehen des Spannmittels wird bei dieser Ausgestaltung am Handauszug gezogen, so dass mittels des Zugmittels das Spannmittel an der Verbindungsstelle durch die Öffnung herausgezogen wird.

In einer Auszugsstellung, in der das Spannmittel entgegen der Wirkung der Einzugseinrichtung aus dem Gehäuse gezogen ist, kann das Spannmittel in Form einer Bucht aus der Öffnung gezogen sein. Die aus dem Gehäuse gezogene Bucht des Spannmittels kann sich insbesondere um die Verbindungsstelle von Handauszug und Spannmittel, insbesondere die oben genannte Rolle herum, erstrecken. Die Verbindungsstelle liegt dabei außerhalb des Gehäuses.

In einer Einzugsstellung, in der das Spannmittel in das Gehäuse eingezogen ist, kann der Handgriff des Handauszugs durch das Spannmittel gegen das Gehäuse gezogen sein. Insbesondere kann der Handgriff am Gehäuse anliegen. Der Handgriff kann sich somit nicht verheddern.

Bei eingezogenem Spannmittel ist die Öffnung bevorzugt vom Handgriff bedeckt oder verschlossen, so das kein Schmutz eindringen kann. Der Handgriff kann insbesondere einen Schaft aufweisen, der bei eingezogenem Spannmittel in die Öffnung bevorzugt passgenau eingeführt ist und diese verschließt.

Die Einzugseinrichtung kann einen Federmotor aufweisen, der insbesondere durch das Herausziehen des Spannmittels aus dem Gehäuse gespannt wird. Der Federmotor kann eine Wickelrolle zum Aufwickeln des Spannmittels antreiben. Die Verbindungsstelle zwischen dem Handauszug und dem Spannmittel kann sich bei dieser Ausgestaltung insbesondere in der Einzugsstellung im Gehäuse zwischen Einzugsöffnung und Wickelrolle befinden. Das Spannmittel kann ein Seil, insbesondere ein Drahtseil sein.

Die Einzugseinrichtung kann ferner einen in einer Auszugsrichtung des Spannmittels aus dem Gehäuse und/oder in eine Einzugsrichtung des Spannmittels in das Gehäuse jeweils selbsttätig sperrenden Ratschenmechanismus aufweisen. Der Ratschenmechanismus kann ferner zwischen diesen beiden Sperrrichtungen umschaltbar ausgestaltet sein.

Die Spannvorrichtung ist für jede Bauform der Gleitschutz- oder Reifenschutzvorrichtung einsetzbar, die mittels eines Spannmittels am Fahrzeugreifen befestigt wird. Insbesondere ist jedoch die Verwendung bei Gleitschutz- oder Reifenschutzvorrichtungen vorgesehen, bei denen das Spannmittel über eine Lauffläche des Fahrzeugreifens von einer Reifenaußenseite, an der sich die Spannvorrichtung befindet, zu einer der Karosserie zugewandten Innenseite des Fahrzeugreifens erstreckt.

Im Folgenden ist die Erfindung anhand eines Ausführungsbeispiels mit Bezug auf die beigefügte Zeichnung näher erläutert. Nach Maßgabe der obigen Ausführungen kann auf ein dargestelltes Merkmal des Ausführungsbeispiels verzichtet werden, wenn es auf mit diesem Merkmal verbundenen technischen Effekt bei einer bestimmten Anwendung nicht ankommen sollte. Umgekehrt kann auch ein oben beschriebenes, unten nicht dargestelltes Merkmal hinzugefügt werden, wenn dessen technischer Effekt für eine bestimmte Anwendung von Vorteil ist.

Es zeigt:

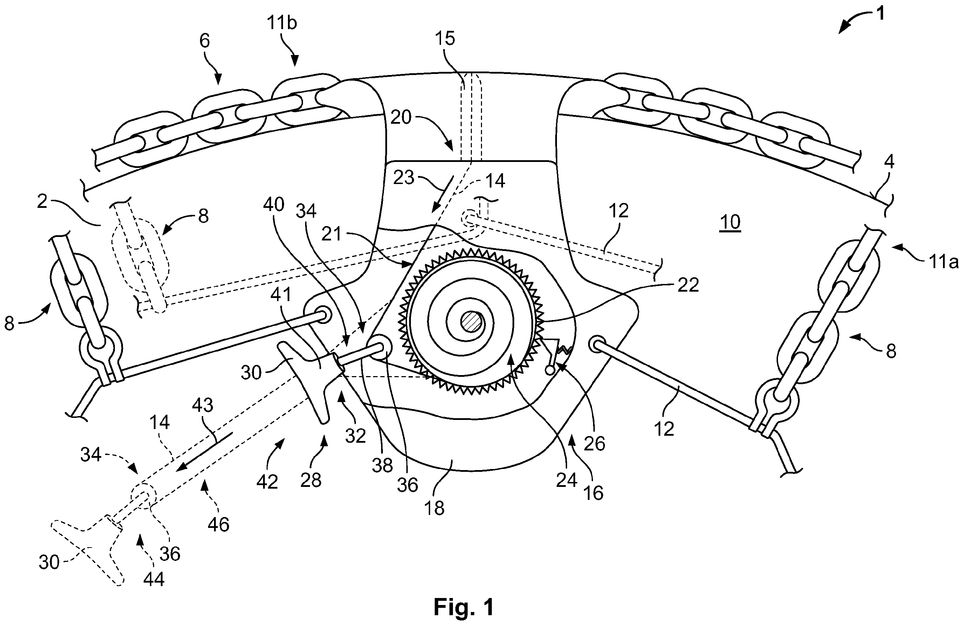

- Fig. 1: eine schematische Darstellung eines Teils einer Gleitschutz- oder Reifenschutzvorrichtung mit einer Spannvorrichtung.

Die Gleitschutz- oder Reifenschutzvorrichtung 1 ist in Fig. 1 in einem auf einem Fahrzeugreifen 2 montierten Zustand dargestellt. Auf einer Lauffläche 4 des Fahrzeugreifens 2 liegt ein Traktionsabschnitt 6 der Gleitschutz- oder Reifenschutzvorrichtung 1 auf. Der Traktionsabschnitt 6 erhöht auf rutschigem Untergrund die Traktion des Fahrzeugreifens. Über Verbindungsabschnitte 8, die an der Reifenflanke 10 sowohl auf der in Fig. 1 dargestellten Außenseite 11a des Reifens als auch der nicht dargestellten Innenseite 11b des Fahrzeugreifens liegen, ist der Traktionsabschnitt 6 mit jeweils einem Seitenstrang 12 verbunden.

Teile der Gleitschutz- oder Reifenschutzvorrichtung 1, die sich auf der Innenseite 11b des Fahrzeugreifens 2 befinden, sind in Fig. 1 in doppelt strichpunktierten Linien dargestellt. Der Seitenstrang 12 auf der Innenseite des Fahrzeugreifens 2 wird durch ein Spannmittel 14 gespannt, das von der Innenseite des Fahrzeugreifens 2 über die Lauffläche 4 zur Außenseite des Fahrzeugreifens 2 beispielsweise in einem Rohr 15 geführt ist.

Wird am Spannmittel 14 gezogen, so zieht sich der Seitenstrang 12 auf der Innenseite 11b des Fahrzeugreifens 2 zusammen und spannt über die Verbindungsabschnitte den Traktionsabschnitt 6. Gleichzeitig wird die Gleitschutz- und Reifenschutzvorrichtung 1 auf dem Fahrzeugreifen 2 gesichert.

Zum selbsttätigen Spannen und Einziehen des Spannmittels 14 dient eine Spannvorrichtung 16. Die Spannvorrichtung 16 weist ein Gehäuse 18 auf, in das sich das Spannmittel 14 durch eine Einzugsöffnung 20 erstreckt. Im Inneren des Gehäuses 18 befindet sich eine Einzugseinrichtung 21, die beispielsweise eine von einem Federmotor 24 angetriebene Wickeltrommel 22 aufweist. Das Spannmittel 14 wird unter Wirkung des Federmotors 24 auf der Wickeltrommel 22 aufwickelt. Die Einzugsrichtung ist in Fig. 1 durch den Pfeil 23 gekennzeichnet.

Um die Gleitschutz- oder Reifenschutzvorrichtung 1 auf dem Fahrzeugreifen 2 zu montieren und den über die Lauffläche 4 auf die Innenseite 11b bewegen zu können, muss der Seitenstrang 12, der an der Innenseite 11b des Fahrzeugreifens 2 zu liegen kommt, zunächst geweitet werden. Hierzu wird das Spannmittel 14 aus der Spannvorrichtung 16 herausgezogen. Dabei wird das Spannmittel 14 von der Wickeltrommel 22 abgewickelt und der Federmotor 24 wird gespannt.

Ein bevorzugt umschaltbarer Ratschenmechanismus 26 der Spannvorrichtung 16 kann das Ausziehen des Spannmittels 14 aus dem und/oder das Einziehen des Spannmittels in das Gehäuse 18 selbsttätig sperren.

Im Betrieb der Gleitschutz- oder Reifenschutzvorrichtung sperrt der Ratschenmechanismus 26 in einer Betriebsart das Ausziehen des Spannmittels 14 aus dem Gehäuse 18 bzw. das Abwickeln des Spannmittels 14 von der Aufwickeltrommel 22, gibt aber die Aufwickelbewegung des Spannmittels frei. So wird das Spannmittel 14 von der Einzugseinrichtung 21 stets unter Spannung gehalten, ohne dass der Seitenstrang 12 auf der Innenseite 11b durch Herausziehen des Spannmittels 14 gelockert werden kann.

Wird die Gleitschutz- oder Reifenschutzvorrichtung 1 nach Gebrauch demontiert, wird - falls vorhanden - zunächst der Ratschenmechanismus 26 umgeschaltet, so dass das Spannmittel 14 durch Herausziehen aus dem Gehäuse 18 von der Aufwickeltrommel 22 abgewickelt werden kann, die Einzugsbewegung in Richtung des Pfeiles 21 aber blockiert ist. Problematisch ist bei der Demontage, dass das Spannmittel 14 nur schwer aus dem Gehäuse 18 gezogen bzw. von der Wickeltrommel 22 abgewickelt werden kann.

Um dies zu erleichtern, weist die Spannvorrichtung 16 einen Handauszug 28 für das Spannmittel 14 auf. Der Handauszug 28 ist mit einem Handgriff 30 versehen und mit dem Spannmittel 14 verbunden. Der Handauszug befindet sich an bevorzugt einer weiteren Öffnung 32, die im Gehäuse 18 zusätzlich zur Einzugsöffnung 20 vorhanden ist. Alternativ kann sich der Handauszug 28 auch an der Einzugsöffnung 20 befinden.

Der Handauszug 28 ist an einer Verbindungsstelle 34 mit dem Spannmittel 14 bevorzugt entlang des Spannmittels 14 verschieblich verbunden. Die Verbindungsstelle 34 befindet sich zwischen der Wickelrolle 22 und der Öffnung 32 bzw. der Einzugsöffnung 20. An der Verbindungsstelle 34 kann sich beispielsweise eine Rolle 36 befinden, über die das Spannmittel 14 geführt ist. Die Rolle 36 ist über ein Zugmittel 38 mit dem Handgriff 30 verbunden. Das Zugmittel 38 kann eine Schlaufe 40 bilden, durch die hindurch sich das Spannmittel 14 erstreckt, so dass es unverlierbar mit dem Handauszug 28 verbunden ist. Anstelle eines Zugmittels kann selbstverständlich auch ein nicht biegeschlaffes Element zwischen Handgriff 30 und Spannmittel 14 verwendet werden, wie beispielsweise ein Ring. Aufgrund seiner Verschieblichkeit muss der Handauszug 28 beim Einziehen des Spannmittels 14 seine Position nicht verändern.

Beim Einziehen in das Gehäuse kann das Spannmittel 14 einfach über die Rolle 26 laufen, ohne dass die vom Federmotor 24 erzeugte Spannkraft durch Reibung verringert wird.

In der in Fig. 1 durchgezogen dargestellten Einzugsstellung 42 ist der Handgriff 30 durch das gespannte Spannmittel 14 gegen das Gehäuse 18 gezogen. Die Rolle 36 und die Verbindungsstelle 34 befinden sich im Gehäuse 18. Insbesondere kann der Handgriff 30 am Gehäuse 18 anliegen, so dass er vor Verschmutzung und Beschädigung geschützt ist. Die Öffnung 32 kann durch den Handgriff 30 verschlossen sein, um das Eindringen von Schmutz in das Gehäuse 18 zu verhindern. Er kann hierzu mit einem Schaft 41 in die Öffnung 32 ragen.

Um zur Demontage der Gleitschutz- oder Reifenschutzvorrichtung 1 das Spannmittel 14 zu lösen und damit beispielsweise den Seitenstrang 12 auf der Innenseite des Fahrzeugreifens 2 so zu lockern, dass die Gleitschutzvorrichtung mit einem geringeren Kraftaufwand über die Lauffläche 4 gezogen werden kann, wird einfach am Handgriff 30 in Richtung 43 gezogen, so dass die in Fig. 1 gestrichelt dargestellte Auszugsstellung 44 erreicht wird. Das Spannmittel 14 wird in Form einer Bucht 46 aus dem Gehäuse 18 gezogen und läuft dabei über die Rolle 36. Die Verbindungsstelle 34 bzw. die Rolle 36, falls vorhanden, sind in der Auszugsstellung 44 ebenfalls aus dem Gehäuse 18 gezogen. Hierbei sollte sich der Ratschenmechanismus 26 in eine Betriebsart umgeschaltet sein, in der das Abwickeln des Spannmittels 14 von der Wickelrolle 22 freigegeben und das Aufwickeln des Spannmittels 14 auf die Wickelrolle 22 gesperrt ist.

### Bezugszeichenliste

- 1: Gleitschutz- oder Reifenschutzvorrichtung
- 2: Fahrzeugreifen
- 4: Lauffläche
- 6: Traktionsabschnitt
- 8: Verbindungsabschnitt
- 10: Reifenflanke
- 11a: Reifenaußenseite
- 11b: Reifeninnenseite
- 12: Seitenstrang
- 14: Spannmittel
- 15: Rohr
- 16: Spannvorrichtung
- 18: Gehäuse
- 20: Einzugsöffnung
- 21: Einzugseinrichtung
- 22: Wickeltrommel
- 23: Einzugsrichtung
- 24: Federmotor
- 26: Ratschenmechanismus
- 28: Handauszug
- 30: Handgriff
- 32: Öffnung
- 34: Verbindungsstelle
- 36: Rolle
- 38: Zugmittel
- 40: Ring oder Schlaufe
- 41: Schaft
- 42: Einzugsstellung
- 43: Auszugsrichtung
- 44: Auszugsstellung
- 46: Bucht

## Patentansprüche

1. Spannvorrichtung (16) für eine Gleitschutz- oder Reifenschutzvorrichtung (1) für einen Fahrzeugreifen (2), mit einem zugmittelförmigen Spannmittel (14) und einem Gehäuse (18), in dem sich eine Einzugseinrichtung (21) zum selbsttätigen Einziehen des Spannmittels (14) in das Gehäuse (18) befindet, **dadurch gekennzeichnet, dass** sich an einer Öffnung (32) des Gehäuses (18) ein Handauszug (28) für das Spannmittel (14) befindet, der mit einem Handgriff (30) versehen und mit dem Spannmittel (14) verbunden ist, wobei das Gehäuse (18) zusätzlich zu der Öffnung (32) mit einer Einzugsöffnung (20) versehen ist, durch die das Spannmittel (14) in das Gehäuse (18) geführt ist.

2. Spannvorrichtung (16) nach Anspruch 1, **dadurch gekennzeichnet, dass** der **Handauszug (28) mit dem** Spannmittel (14) zwischen der Einzugsöffnung (20) und der Einzugseinrichtung (21) verbunden ist.

3. Spannvorrichtung (16) nach Anspruch 1 oder 2, **dadurch gekennzeichnet, dass** der Handauszug (28) an einer entlang des Spannmittels (14) verschieblichen Verbindungsstellung (34) mit dem Spannmittel (14) verbunden ist.

4. Spannvorrichtung (16) nach Anspruch 3, **dadurch gekennzeichnet, dass** der Handauszug (28) eine Rolle (36) aufweist, die mit dem Handgriff (30) verbunden ist, und dass das Spannmittel (14) über die Rolle (36) geführt ist.

5. Spannvorrichtung (16) nach Anspruch 4, **dadurch gekennzeichnet, dass** das Spannmittel (14) im Gehäuse (18) beim Einziehen (23) in das Gehäuse (18) über die Rolle (36) läuft.

6. Spannvorrichtung (16) nach einem der Ansprüche 1 bis 5, **dadurch gekennzeichnet, dass** das Spannmittel (14) durch einen Ring oder eine Schlaufe (40) des Handauszuges (28) geführt ist.

7. Spannvorrichtung (16) nach einem der Ansprüche 1 bis 6, **dadurch gekennzeichnet, dass** das Spannmittel (14) in einer Auszugsstellung (44) in einer Bucht (46) aus der Öffnung (32) vom Handauszug (28) gezogen ist.

8. Spannvorrichtung (16) nach einem der Ansprüche 3 bis 7, **dadurch gekennzeichnet, dass** die Verbindungsstelle (34) in der Auszugsstellung (44) aus dem Gehäuse (18) gezogen ist.

9. Spannvorrichtung (16) nach einem der Ansprüche 1 bis 8, **dadurch gekennzeichnet, dass** bei eingezogenem Spannmittel (14) der Handgriff (30) durch das Spannmittel (14) gegen das Gehäuse (18) gezogen ist.

10. Spannvorrichtung (16) nach einem der Ansprüche 1 bis 9, **dadurch gekennzeichnet, dass** bei eingezogenem Spannmittel (14) die Öffnung (32) vom Handgriff (30) abgedeckt ist.

11. Gleitschutz- und/oder Reifenschutzvorrichtung (1) für einen Fahrzeugreifen (2) mit einer Spannvorrichtung (16) zur Befestigung der Gleitschutz- und/oder Reifenschutzvorrichtung (1) auf dem Fahrzeugreifen (2), **dadurch gekennzeichnet, dass** die Spannvorrichtung (14) nach einem der Ansprüche 1 bis 10 ausgestaltet ist.

12. Gleitschutz- und/oder Reifenschutzvorrichtung (1) nach Anspruch 11, **dadurch gekennzeichnet, dass** das Spannmittel (14) bei montierter Gleitschutz- und/oder Reifenschutzvorrichtung (1) von einer Außenseite (11a) des Fahrzeugreifens (2) zu einer Innenseite (11b) des Fahrzeugreifens (2) geführt ist.

## Claims

1. Tensioning device (16) for an anti-skid or tyre protection device (1) for a motor vehicle tyre (2), comprising a tensioning means (14) in the form of a traction mechanism and comprising a housing (18) in which a draw-in apparatus (21) for automatically drawing the tensioning means (14) into the housing (18) is located, **characterised in that** a manual pull-out (28) for the tensioning means (14) is located on an opening (32) in the housing (18), which pull-out is provided with a handle (30) and is connected to the tensioning means (14), the housing (18) being provided, in addition to the opening (32), with a feed opening (20) through which the tensioning means (14) is guided into the housing (18).

2. Tensioning device (16) according to claim 1, **characterised in that** the manual pull-out (28) is connected to the tensioning means (14) between the feed opening (20) and the draw-in apparatus (21).

3. Tensioning device (16) according to either claim 1 or claim 2, **characterised in that** the manual pull-out (28) is connected to the tensioning means (14) at a connecting position (34) that is movable along the tensioning means (14).

4. Tensioning device (16) according to claim 3, **characterised in that** the manual pull-out (28) comprises a roller (36) which is connected to the handle (30), and **in that** the tensioning means (14) is guided over the roller (36).

5. Tensioning device (16) according to claim 4, **characterised in that** the tensioning means (14) extends within the housing (18) over the roller (36) during the drawing (23) thereof into the housing (18).

6. Tensioning device (16) according to any of claims 1 to 5, **characterised in that** the tensioning means (14) is guided by a ring or a loop (40) on the manual pull-out (28).

7. Tensioning device (16) according to any of claims 1 to 6, **characterised in that** the tensioning means (14) is pulled out of the opening (32) in an extended position (44) in a bay (46) by means of the manual pull-out (28).

8. Tensioning device (16) according to any of claims 3 to 7, **characterised in that** the connection point (34) is pulled out of the housing (18) in the extended position (44).

9. Tensioning device (16) according to any of claims 1 to 8, **characterised in that** the handle (30) is pulled towards the housing (18) by the tensioning means (14) when the tensioning means (14) is drawn in.

10. Tensioning device (16) according to any of claims 1 to 9, **characterised in that** the opening (32) is covered by the handle (30) when the tensioning means (14) is drawn in.

11. Anti-skid and/or tyre protection device (1) for a motor vehicle tyre (2) comprising a tensioning device (16) for securing the anti-skid and/or tyre protection device (1) to the motor vehicle tyre (2), **characterised in that** the tensioning device (14) is designed according to any of claims 1 to 10.

12. Anti-skid and/or tyre protection device (1) according to claim 11, **characterised in that** the tensioning means (14) is guided from an outer side (11a) of the motor vehicle tyre (2) to an inner side (11b) of the motor vehicle tyre (2) when the anti-skid and/or tyre protection means (1) is mounted.

## Revendications

1. Dispositif de serrage (16) pour un dispositif antidérapant ou de protection de pneumatique (1) pour un pneumatique de véhicule (2), comprenant un moyen de serrage (14) sous forme de moyen de traction, et un boitier (18) dans lequel se trouve un système de rétraction (21) pour assurer la rétraction automatique du moyen de serrage (14) dans le boitier (18), **caractérisé en ce qu'**au niveau d'une ouverture (32) du boitier (18), se trouve un extracteur manuel (28) pour le moyen de serrage (14), qui est pourvu d'une poignée (30) et est relié au moyen de serrage (14), le boitier (18) étant pourvu, en plus de l'ouverture (32), d'une ouverture de rétraction (20) à travers laquelle le moyen de serrage (14) est mené et guidé vers l'intérieur du boitier (18)

2. Dispositif de serrage (16) selon la revendication 1, **caractérisé en ce que** l'extracteur manuel (28) est relié au moyen de serrage (14) entre l'ouverture de rétraction (20) et le système de rétraction (21).

3. Dispositif de serrage (16) selon la revendication 1 ou la revendication 2, **caractérisé en ce que** l'extracteur manuel (28) est relié au moyen de serrage (14), au niveau d'une zone de liaison (34) pouvant coulisser le long du moyen de serrage (14).

4. Dispositif de serrage (16) selon la revendication 3, **caractérisé en ce que** l'extracteur manuel (28) comporte un galet (36), qui est relié à la poignée (30), et **en ce que** le moyen de serrage (14) est mené et guidé en passant sur le galet (36).

5. Dispositif de serrage (16) selon la revendication 4, **caractérisé en ce que** le moyen de serrage (14), dans le boitier (18), circule par-dessus le galet (36) lors de la rétraction (23) dans le boitier (18) .

6. Dispositif de serrage (16) selon l'une des revendications 1 à 5, **caractérisé en ce que** le moyen de serrage (14) est mené et guidé à travers un anneau ou une boucle (40) de l'extracteur manuel (28).

7. Dispositif de serrage (16) selon l'une des revendications 1 à 6, **caractérisé en ce que** le moyen de serrage (14), dans une position d'extraction (44), est tiré dans un fourreau (46) hors de l'ouverture (32) de l'extracteur manuel (28).

8. Dispositif de serrage (16) selon l'une des revendications 3 à 7, **caractérisé en ce que** la zone de liaison (34) est, dans la position d'extraction (44), tirée hors du boitier (18).

9. Dispositif de serrage (16) selon l'une des revendications 1 à 8, **caractérisé en ce que** pour un moyen de serrage (14) rétracté, la poignée (30) est tirée par le moyen de serrage (14) contre le boitier (18) .

10. Dispositif de serrage (16) selon l'une des revendications 1 à 9, **caractérisé en ce que** pour un moyen de serrage (14) rétracté, l'ouverture (32) est recouverte par la poignée (30).

11. Dispositif antidérapant ou de protection de pneumatique (1) pour un pneumatique de véhicule (2), comprenant un dispositif de serrage (16) pour la fixation du dispositif antidérapant ou de protection de pneumatique (1) sur le pneumatique de véhicule (2), **caractérisé en ce que** le dispositif de serrage (16) est réalisé conformément à l'une des revendications 1 à 10.

12. Dispositif antidérapant ou de protection de pneumatique (1) selon la revendication 11, **caractérisé en ce que** le moyen de serrage (14), pour un dispositif antidérapant ou de protection de pneumatique (1) monté, est mené et guidé à partir d'un côté extérieur (11a) du pneumatique de véhicule (2), vers un côté intérieur (11b) du pneumatique de véhicule (2).
